# FASCICULE DE BREVET EUROPEEN

(11) **EP 3 134 246 B1**
(45) Date de publication et mention de la délivrance du brevet: **15.08.2018**
(21) Numéro de dépôt: 15725791.6
(22) Date de dépôt: 23.04.2015
(51) Int. Cl.: B29C 45/16, B29C 45/00, B29C 45/14, F16H 55/17, F16H 55/48

(54) **PROCÉDÉ DE FABRICATION D'UNE ROUE DENTÉE ALLÉGÉE PAR SURMOULAGE DOUBLE**
VEFAHREN ZUM HERSTELEN EINES ZAHNRADES MITTELS DOPPELTEM SPRITZGIESSEN
PROCESS FOR MANUFACTURING A TOOTHED WHEEL BY DOUBLE INJECTION- MOULDING

(30) Priorité: 24.04.2014 FR 1453702
(43) Date de publication de la demande: 01.03.2017
(73) Titulaire: JTEKT Europe, 69540 Irigny (FR)
(72) Inventeur: BROCHOT, Patrice, F-69600 Oullins (FR); REY, Laurent, F-69100 Villeurbanne (FR)
(74) Mandataire: Chevalier, Renaud Philippe
(86) Numéro de dépôt international: PCT/FR2015/051110
(87) Numéro de publication internationale: WO 2015/162388

(56) Documents cités:
- EP-A1- 1 780 445
- DE-A1-102012 102 777
- DE-A1-102012 102 780
- JP-A- S5 541 273
- JP-A- H09 280 345
- US-A1- 2010 052 412

## Description

La présente invention concerne le domaine général de la fabrication des roues destinées à assurer la transmission d'un couple au sein d'un mécanisme, et plus particulièrement le domaine de la fabrication des roues dentées destinées aux mécanismes de type engrenages.

La présente invention concerne plus particulièrement la fabrication des roues dentées destinées aux réducteurs de direction assistée pour véhicules automobiles.

On connaît, notamment par le document US-2010/0201030, un procédé de fabrication de roues dentées au cours duquel on place dans un moule un moyeu métallique, ainsi qu'une jante dentée, puis l'on relie le moyeu à la jante en formant entre eux, par moulage, un disque intermédiaire en matière plastique.

Un tel procédé peut toutefois présenter certains inconvénients.

Tout d'abord, l'utilisation d'un moyeu métallique, de dimensions parfois relativement importantes, tend à alourdir la roue dentée ainsi obtenue.

Ensuite, un tel procédé impose de positionner très précisément la jante par rapport au moyeu, lors du moulage du disque intermédiaire. En pratique, tout défaut de positionnement des pièces, ou tout déplacement incontrôlé d'une pièce par rapport à l'autre lors du moulage, sous la pression du plastique injecté, peut conduire à un défaut de concentricité significatif des dents de la roue par rapport à l'axe de rotation de ladite roue, ce qui peut compromettre le bon fonctionnement de la roue dentée (bruit, usure...), voire provoquer sa mise au rebut.

En outre, un tel procédé requiert que la jante et/ou le moyeu présentent des formes relativement complexe, destinées à améliorer l'accroche du disque intermédiaire, ce qui peut en pratique compliquer la fabrication préalable du moyeu et/ou de la jante, et donc en augmenter le coût.

Enfin, il est systématiquement nécessaire de procéder, après le moulage, à une reprise de la roue par usinage, afin notamment d'éliminer les restes solidifiés des descentes de coulée (coniques), ce qui augmente le temps de fabrication et tend à occasionner un certain gaspillage de matière première. Un outre procédé de fabrication de roues dentées est connue de JP S 55 920 906, qui est considérer l'état le plus proche. Les objets assignés à l'invention visent par conséquent à remédier aux inconvénients susmentionnés et à proposer un nouveau procédé de fabrication de roues dentées qui soit simple et peu onéreux à mettre en oeuvre, et qui permette d'obtenir, de façon fiable et reproductible, des roues dentées à la fois légères et robustes.

Les objets assignés à l'invention sont atteints au moyen d'un procédé de fabrication d'une roue dentée, ledit procédé comprenant une étape (a) de réalisation d'une âme porteuse, au cours de laquelle on réalise une âme porteuse dans un premier matériau polymère, ladite âme porteuse comportant un moyeu, d'axe directeur (XX'), ainsi qu'une collerette qui s'étend sensiblement radialement depuis ledit moyeu, en s'éloignant de l'axe directeur (XX'), jusqu'à un bord tombé périphérique, ladite collerette étant délimitée axialement par une surface dite « supérieure » orientée du côté axialement opposé au bord tombé, et par une surface dite « inférieure » orientée axialement du côté du bord tombé, ledit procédé comprenant ensuite une étape (b) d'enrobage au cours de laquelle on réalise par surmoulage sur l'âme porteuse, dans un second matériau polymère, une couche d'enrobage permanente qui reste à demeure sur la roue dentée finie, ladite couche d'enrobage comprenant d'un seul tenant d'une part une couche frontale qui recouvre la surface supérieure de la collerette en surépaisseur axiale de ladite collerette, et d'autre part une couche latérale qui prolonge axialement ladite couche frontale en recouvrant la surface radialement externe du bord tombé, en surépaisseur radiale dudit bord tombé, de telle manière que ladite couche latérale forme une jante dans l'épaisseur radiale de laquelle sont réalisées les dents d'engrènement de la roue.

Avantageusement, l'utilisation de matériaux polymères simplifie la fabrication de l'âme porteuse et de la couche d'enrobage, en permettant le cas échéant une fabrication par moulage ou, plus particulièrement, une fabrication par une succession d'opérations de surmoulage.

En outre, l'utilisation de matériaux polymères procure un allégement global de la roue dentée, par rapport à une roue à structure métallique.

La couche d'enrobage selon l'invention forme en outre avantageusement une coque monobloc qui adhère à l'âme porteuse et enveloppe ladite âme porteuse dans plusieurs directions, à la fois axialement, en s'étalant transversalement à l'axe directeur (XX'), sur la surface supérieure de la collerette, et radialement, en s'étalant sensiblement parallèlement audit axe directeur (XX'), sur le bord tombé, ce qui permet d'obtenir un excellent ancrage de la couche d'enrobage sur l'âme porteuse, et par conséquent une excellente cohésion de la structure mixte, ici bicouche, ainsi obtenue, qui est conservée définitivement afin de garantir durablement une bonne résistance de la roue dentée pendant son fonctionnement, tant vis-à-vis des couples transmis autour de l'axe directeur (XX') que d'éventuels efforts d'arrachement axiaux.

Avantageusement, en recouvrant l'âme porteuse par une couche d'enrobage étendue, qui nappe aussi bien la jante périphérique de la roue dentée que la portion radialement intermédiaire de ladite roue dentée, comprise entre le moyeu et ladite jante, et qui correspond donc aux "rayons" de la roue dentée, on renforce et on rigidifie efficacement la structure de l'âme porteuse dans son ensemble, tout en utilisant une quantité relativement faible de matière.

A ce titre, on notera que grâce d'une part à la structure globalement convexe de la roue dentée, en coque de type dôme creux (centré sur l'axe générateur) ou "cloche", qui est obtenue grâce au profil de l'âme que dessinent la collerette et le bord tombé placé dans la continuité de ladite collerette, et grâce d'autre part à une couche d'enrobage qui épouse sensiblement ce même profil, on confère une excellente rigidité à la roue dentée, même en utilisant des épaisseurs de matière relativement fines, tant pour l'âme que pour la couche d'enrobage.

Avantageusement, la roue dentée selon l'invention est donc à la fois légère et économe en matière première, tout en restant particulièrement solide.

En outre, la forme idoine de l'âme porteuse permet un nappage efficace, progressif et homogène de ladite âme par le second matériau polymère, lorsque celui-ci se trouve à l'état fluide et s'écoule à la surface de ladite âme pendant le surmoulage.

La fabrication de la couche d'enrobage est donc particulièrement simple et fiable.

En outre, la qualité de l'écoulement et de la répartition de matière procurée par l'agencement proposé par l'invention permet notamment de recourir à un surmoulage en diaphragme (plat) par injection centrale, dans l'axe de l'âme porteuse, qui utilise très peu de matière résiduelle pour la descente de coulée.

On économise ainsi de la matière première, tout en réduisant significativement les opérations de finition par reprise d'usinage.

Enfin, le procédé de fabrication proposé, qui permet de réaliser facilement une jante homogène et de bonne épaisseur radiale autour du bord tombé, dans un (second) matériau particulièrement résistant, est particulièrement adapté à la mise en oeuvre d'une opération de taillage des dents d'engrènement de la roue qui soit postérieure aux opérations de moulage, et de préférence postérieure à la fixation de la roue sur son arbre, ce qui permet de s'affranchir de tout défaut de concentricité entre le diamètre primitif effectif de la denture et l'axe matériel de rotation de la roue dentée.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :
Les figures 1, 2, 3 et 4 illustrent, selon des vues en coupe axiale, les étapes successives d'un procédé de fabrication selon l'invention.
Les figures 5 et 6 illustrent, selon des vues partielles en coupe axiale, l'âme porteuse nue puis l'âme porteuse revêtue de sa couche d'enrobage définitive.
Les figures 7, 8 et 9 illustrent, selon des vues en perspective de dessus, en perspective de dessus écorchée, et en perspective de dessous, la roue dentée finie de la figure 4, obtenue par un procédé selon l'invention.
Les figures 10, 11, 12 et 13 illustrent, selon des vues respectivement en perspective de dessous, en perspective de dessus, en perspective de dessus écorchée, et en projection axiale de dessus, l'âme porteuse de la roue dentée des figures 1 à 9, montée sur une douille de raccordement.
La figure 14 illustre, selon une vue partielle de dessus, le détail des rainures de canalisation creusées dans l'âme porteuse, au niveau de la transition entre la collerette et le bord tombé.
Les figures 15 et 16, respectivement 17 et 18, respectivement 19 et 20 illustrent, selon des paires de vues en perspective de dessous et en projection axiale de dessous, trois variantes de réalisation de roues dentées selon l'invention.

La présente invention concerne un procédé de fabrication d'une roue dentée 1.

Ladite roue dentée 1 pourra notamment être une roue de réducteur à engrenage, et plus particulièrement une roue de réducteur pour direction assistée, et pourra par exemple former une roue tangente destinée à être entraînée par une vis sans fin.

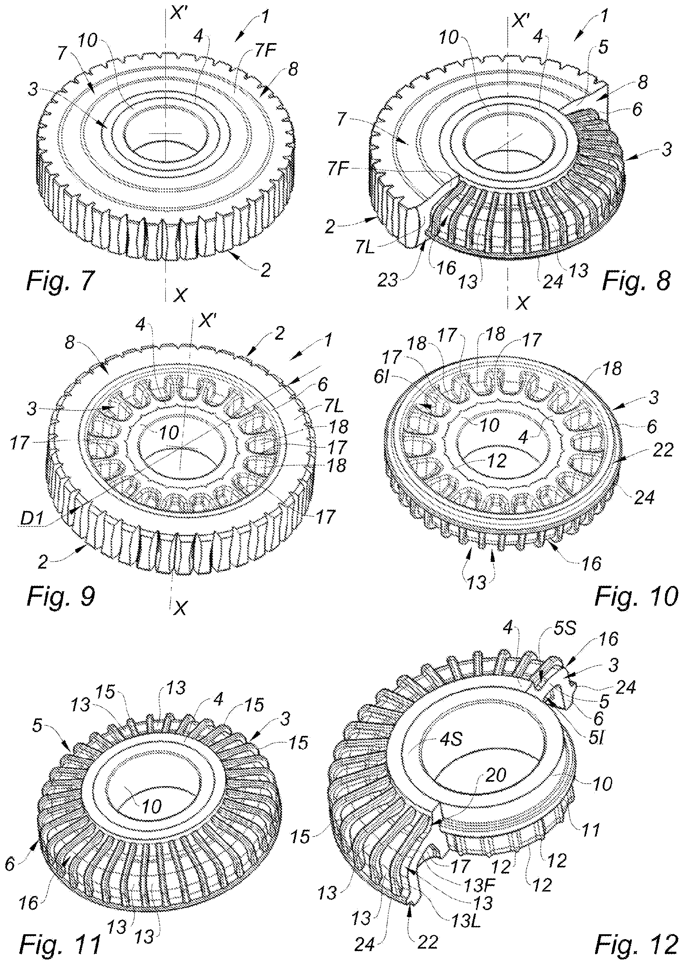

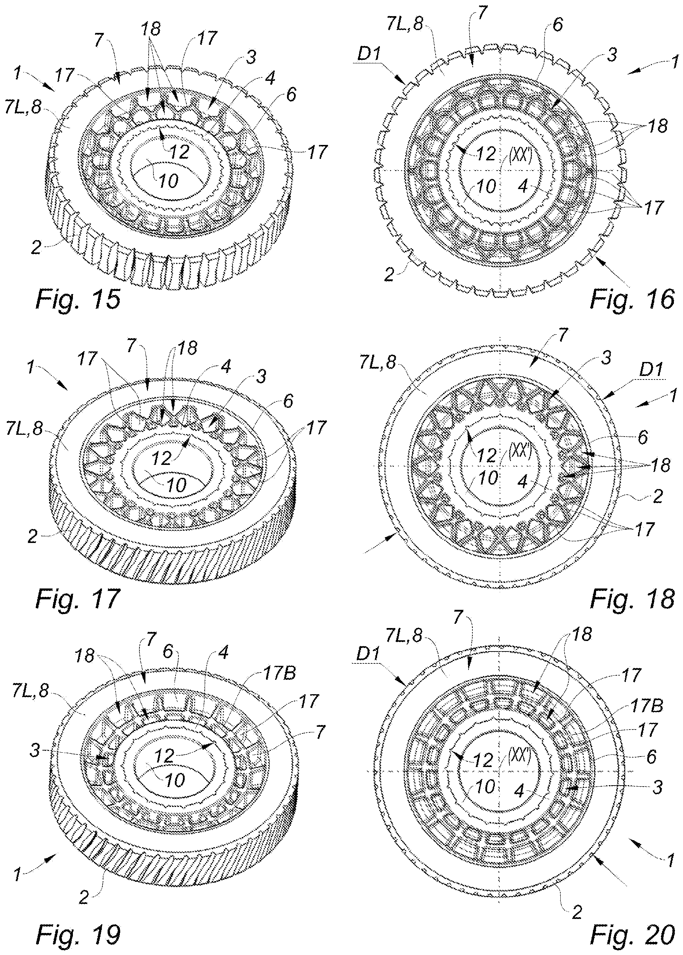

La roue dentée pourra présenter tout type de dents d'engrènement 2, par exemple formant une denture droite (tel que cela est illustré, à titre non limitatif, sur les figures 7 à 9, 15 et 16), une denture hélicoïdale (tel que cela est illustré, à titre non limitatif, sur les figures 17 à 20), ou une denture en chevrons.

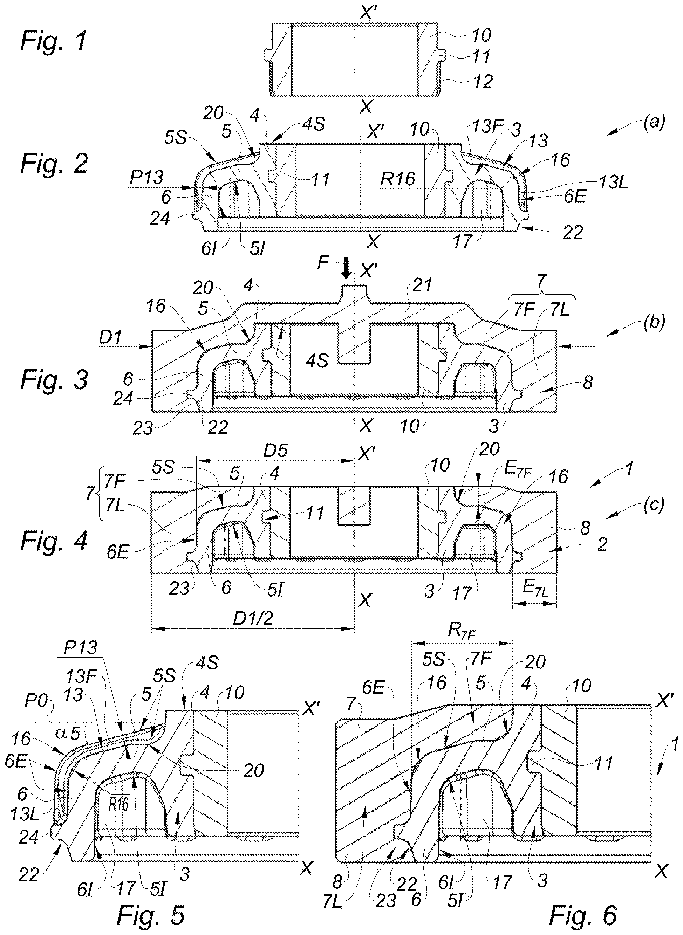

Le procédé comprend tout d'abord une étape (a) de réalisation d'une âme porteuse, au cours de laquelle on réalise une âme porteuse 3 dans un premier matériau polymère, tel que cela est illustré sur la figure 2.

Selon l'invention, et tel que cela est notamment illustré sur les figures 1 à 6, 8, 11, 12 et 13, ladite âme porteuse 3 comporte un moyeu 4, d'axe directeur (XX'), ainsi qu'une collerette 5 qui s'étend sensiblement radialement depuis ledit moyeu, en s'éloignant de l'axe directeur (XX'), jusqu'à un bord tombé 6 périphérique.

L'axe directeur (XX') correspond en pratique à l'axe de rotation de la roue dentée 1, et est avantageusement commun aux différents éléments constitutifs de ladite roue.

Par commodité de description, on désignera par « axiale » une direction ou une dimension considérée selon ledit axe directeur (XX') ou parallèlement à ce dernier, et par « radiale » une direction ou une dimension considérée transversalement, et plus particulièrement perpendiculairement, audit axe directeur (XX').

Par convention, on considérera que la collerette 5 est délimitée axialement par une surface dite « supérieure » 5S orientée du côté axialement opposé au bord tombé 6, et par une surface dite « inférieure » 5I orientée axialement du côté du bord tombé 6.

La surface dite supérieure 5S correspondra ici en pratique à la surface apparente destinée à recevoir une couche d'enrobage 7 (alors que la surface inférieure opposée 5I est de préférence destinée à rester nue, sans couche d'enrobage), ladite surface supérieure 5S étant orientée axialement à cet effet du côté de l'arrivée de matière (du côté de l'injecteur de surmoulage), tandis que le bord tombé 6 "tombe" (et est contenu) en retrait axial de ladite surface supérieure 5S.

Tel que cela est notamment visible sur les figures 8, 11 et 13, la collerette 5 (pleine) entoure le moyeu 4 sur tout le pourtour dudit moyeu, à 360 degrés autour de l'axe directeur (XX'), pour faire office de rayons de la roue, de manière à pouvoir assurer une liaison stable entre ledit moyeu 4 et la périphérie de la roue dentée 1 formant la jante 8 porteuse des dents d'engrènement 2.

A ce titre, on notera que le diamètre hors-tout D5 de la collerette 5, et plus globalement le diamètre hors-tout de l'âme porteuse 3, sera de préférence égal ou supérieur à 50%, 60 %, voire 75 % du diamètre hors-tout D1 de la roue 1 finie, et de préférence inférieur ou égal à 90 %, voire à 85 % dudit diamètre hors-tout D1 de la roue finie. A titre indicatif, sur les vues fournies, ce rapport D5/D1 est de l'ordre de 84 %.

Bien que l'invention ne soit pas limitée à une roue 1 de dimensions particulières, on notera que, dans le cadre notamment d'une roue 1 destinée à un réducteur de direction assistée, le diamètre hors-tout D1 de ladite roue 1 pourra être sensiblement compris entre 3 cm et 20 cm, plus particulièrement entre 5 cm et 15 cm, et de préférence égal à 10 cm.

Le moyeu 4 s'étendra de préférence axialement au-delà de l'épaisseur de la collerette 5, afin d'assurer une portée axiale suffisante de la roue 1 sur son arbre.

De préférence, par mesure de compacité, ledit moyeu 4 s'étendra au moins en partie en saillie axiale de la surface inférieure 5S, à l'intérieur du volume enveloppé par la collerette 5 et par le bord tombé 6, tel que cela est illustré sur les figures 2 à 6.

De façon particulièrement préférentielle, le moyeu 4 s'étendra (dépassera) axialement de part et d'autre de la collerette 5, aussi bien en saillie axiale de la surface supérieure 5S que, à l'opposé, en saillie axiale de la surface inférieure 5I.

La collerette 5 s'étend de préférence, et à tout le moins s'amorce depuis le moyeu 4, sensiblement dans un plan P0 normal à l'axe directeur (XX'), ou, plus particulièrement, tel que cela est visible sur la figure 5, selon une légère pente α₅ qui rabat progressivement ladite collerette 5 vers le bord tombé 6, au fur et à mesure que l'on s'éloigne de l'axe directeur (XX').

La pente α₅ (le cône) suivie par la collerette 5, ou à tout le moins par la surface supérieure 5S de ladite collerette 5, pourra être comprise entre 5 degrés et 20 degrés, et de préférence entre 10 degrés et 15 degrés, par rapport au plan P0 normal à l'axe directeur (XX'). A titre indicatif, sur la figure 5, ladite pente α₅ est de l'ordre de 15 degrés.

Un tel agencement tronconique en pente facilitera tout d'abord la fabrication par moulage de l'âme porteuse 3, notamment en simplifiant les dépouilles, et pourra en outre améliorer ensuite l'écoulement du second matériau polymère sur la surface supérieure 5S lors de la réalisation de la couche d'enrobage 7.

Le bord tombé 6, sécant à la collerette 5, est quant à lui rabattu axialement dans la continuité de ladite collerette 5, de sorte à former un cylindre, et plus préférentiellement une bande annulaire, concentrique au moyeu 4 et radialement distant dudit moyeu 4.

Ledit bord tombé 6, et plus particulièrement sa surface radialement externe 6E, s'étend ainsi de préférence sensiblement parallèlement (à +/- 5 degrés ou +/- 10 degrés près, par exemple) à l'axe directeur (XX'), voire exactement parallèlement à l'axe directeur (XX').

L'ensemble formé par la collerette 5 et le bord tombé 6, et plus globalement l'âme porteuse 3, peut ainsi avantageusement présenter une structure de type coque de révolution, en forme de dôme (ou de cloche) convexe, à la fois légère, robuste et rigide. La roue dentée 1 formée à partir d'une telle âme porteuse 3 pourra donc bénéficier de ces propriétés de rigidité et de légèreté.

Selon l'invention, et tel que cela est notamment illustré sur la figure 3, le procédé comprend ensuite, après l'étape (a) de réalisation de l'âme porteuse 3, une étape (b) d'enrobage au cours de laquelle on réalise par surmoulage sur l'âme porteuse 3, dans un second matériau polymère, une couche d'enrobage 7 permanente qui reste à demeure sur la roue dentée 1 finie (c'est-à-dire que ladite couche d'enrobage 7 n'est pas retirée, ou au moins pas entièrement retirée, par usinage après avoir été formée sur l'âme porteuse 3, de manière à être conservée sur la roue dentée 1 définitive, au sein de laquelle ladite couche d'enrobage 7 joue notamment un rôle fonctionnel de renfort de structure).

Ladite couche d'enrobage 7 (qui subsiste sur la roue définitive) comprend d'un seul tenant d'une part une couche frontale 7F (ou « couche supérieure ») qui recouvre la surface supérieure 5S de la collerette 5 en surépaisseur axiale de ladite collerette 5, et d'autre part une couche latérale 7L qui prolonge axialement ladite couche frontale 7F en recouvrant la surface radialement externe 6E du bord tombé 6, en surépaisseur radiale dudit bord tombé 6, de telle manière que ladite couche latérale 7L forme une jante 8 dans l'épaisseur radiale de laquelle sont réalisées les dents d'engrènement 2 de la roue 1.

Avantageusement, l'ajout en surépaisseur de l'âme porteuse 3, par surmoulage, et la conservation, au sein de la roue 1 finie, d'une couche d'enrobage 7 à deux "pans" jointifs et sécants (sensiblement en « L »), à savoir une couche frontale 7F (formant un premier pan de type disque sensiblement radial) et une couche latérale 7L (formant un second pan de type anneau sensiblement axial, qui prolonge le premier pan), permet d'obtenir une roue 1 à structure bicouche, dans laquelle la seconde couche (la couche d'enrobage 7), formée par le second matériau polymère, renforce (consolide) la première couche (l'âme porteuse 3) qui est formée par le premier matériau polymère et à laquelle ladite seconde couche d'enrobage 7 (et donc ledit second matériau) se superpose, cette structure bicouche se retrouvant aussi bien dans la zone intermédiaire correspondant aux "rayons" de la roue (c'est-à-dire au niveau de la collerette 5, depuis le moyeu 4 jusqu'au bord tombé 6) que dans la zone périphérique de la jante 8 (au niveau du bord tombé 6).

A ce titre, on notera que la couche frontale 7F d'enrobage couvre de préférence, autour du moyeu 4 et de l'axe directeur (XX'), un domaine annulaire dont l'étendue radiale R_{7F} représente au moins 25 %, au moins 30 %, et préférentiellement entre 40 % et 80 %, de l'étendue radiale totale de la surface frontale de l'âme porteuse 3 qui est radialement comprise entre la paroi radialement interne de l'alésage du moyeu 4 et la surface radialement externe 6E du bord tombé 6.

Selon un dimensionnement qui peut être alternatif ou bien sensiblement équivalent à celui mentionné dans le paragraphe précédent, la couche frontale 7F d'enrobage pourra couvrir, autour du moyeu 4 et de l'axe directeur (XX'), en chevauchement sur la surface supérieure 5S de la collerette 5, un domaine annulaire dont l'étendue radiale R_{7F} (considérée entre l'axe directeur (XX') et la jante 8) représente au moins 5%, au moins 10 %, au moins 20 %, et plus particulièrement entre 20 % et 50 %, par exemple entre 25 % et 35 % du rayon hors-tout (c'est-à-dire du demi-diamètre hors-tout D1/2) de la roue 1 finie.

De façon particulièrement préférentielle, l'étendue radiale R_{7F} de la couche frontale 7F d'enrobage sera supérieure (et préférentiellement plusieurs fois supérieure) à l'épaisseur axiale E_{7F} de ladite couche frontale 7F d'enrobage, afin d'obtenir une bonne assise de la couche d'enrobage 7 sur l'âme porteuse 3 et un renforcement efficace de ladite âme porteuse 3 sans pour autant trop augmenter l'encombrement et le poids de la roue 1.

La continuité et l'étendue de la couche d'enrobage 7, qui vient former une sur-coque monolithique enveloppante autour de l'âme porteuse 3, permet donc d'obtenir une roue dentée 1 dont la structure est particulièrement résistante en tous points, aussi bien à la périphérie que dans la portion intermédiaire de la roue 1, et ce même si, le cas échéant, on utilise une âme porteuse 3 et/ou une couche d'enrobage 7 relativement fine(s), et donc particulièrement légère(s).

La structure en coque convexe de la couche d'enrobage 7 permet en particulier de renforcer l'adhérence de la couche d'enrobage 7 sur l'âme porteuse, en maximisant l'étendue de l'interface de contact entre le premier et le second matériau polymère.

Cette même structure en coque offre de surcroît un excellent ancrage mécanique de la couche d'enrobage 7 sur l'âme porteuse 3, la couche frontale 7F formant notamment une butée d'immobilisation axiale de la couche d'enrobage 7 contre l'âme porteuse 3, et la couche latérale 7L une butée de centrage (sur l'axe directeur) et d'immobilisation radiale (transversalement à l'axe directeur).

En outre, la continuité de la couche d'enrobage 7 qui recouvre d'un seul tenant la collerette 5 et le bord tombé 6 permet de conférer à la roue 1 un aspect soigné, avec une finition homogène, dépourvue d'aspérités ou d'amorces potentielles de fissures.

Bien qu'il ne soit pas exclu de former l'âme porteuse 3 et/ou la couche d'enrobage 7 au moyen d'un premier matériau, respectivement d'un second matériau, de type résine thermodurcissable, notamment par moulage, on préférera utiliser un premier matériau thermoplastique, et/ou respectivement un second matériau thermoplastique.

On pourra ainsi aisément réaliser l'âme porteuse 3, puis la couche d'enrobage 7, par moulage à chaud, notamment par (sur)moulage par injection à une pression supérieure à la pression atmosphérique.

A titre indicatif, l'épaisseur axiale E_{7F} résiduelle de la couche frontale 7F sera comprise entre 4 mm et 8 mm, et/ou entre 4 % et 8 % du diamètre hors-tout D1 de la roue 1 finie.

A titre indicatif, l'épaisseur radiale (totale) E_{7L} de la couche latérale 7L, c'est-à-dire l'épaisseur de la jante 8 (dents 2 comprises) pourra être comprise entre 7 mm et 12 mm, et/ou entre 7 % et 12 % du diamètre hors-tout D1 de la roue finie ; le cas échéant, l'épaisseur radiale résiduelle minimale de la couche latérale 7L à fond de denture pourra être comprise entre 4 mm et 8 mm.

Par ailleurs, l'étape de taillage des dents d'engrènement 2 (dans l'épaisseur de la jante 8) interviendra de préférence postérieurement à l'étape (b) d'enrobage par surmoulage, et, de façon particulièrement préférentielle, après que la roue 1 aura été fixée sur son arbre (non représenté).

Ainsi, en taillant les dents 2 après le moulage de la roue 1, alors que l'axe de rotation effectif de la roue 1 est matérialisé par l'arbre sur lequel ladite roue 1 est fixée, si bien que ledit arbre forme une référence pour la machine de taillage, on pourra éviter tout défaut de concentricité entre le diamètre primitif des dents 2 et ledit axe effectif de rotation.

A titre préférentiel, l'arbre auquel est fixé la roue 1 comprendra, à une extrémité opposée à l'extrémité recevant ladite roue 1, une denture, par exemple hélicoïdale, formant un pignon d'engrènement destiné par exemple à venir en prise sur une colonne de direction assistée.

De préférence, lors de l'étape (a) de réalisation de l'âme porteuse 3, on réalise le moyeu 4, la collerette 5 et le bord tombé 6 d'un seul tenant.

Plus globalement, on réalisera de préférence l'âme porteuse 3 d'un seul tenant, dans le premier matériau polymère.

On obtiendra ainsi de façon simple et rapide une âme porteuse particulièrement solide.

De préférence, tel que cela est illustré sur les figures 1 et 2, on formera l'âme porteuse 3 (préférentiellement d'un seul tenant) par surmoulage sur une douille métallique de raccordement 10, destinée à être emmanchée sur un arbre, ou bien directement par surmoulage sur l'arbre de support définitif de la roue dentée 1 (en pratique, il suffirait pour cela de substituer, sur les figures 1 à 6, ledit arbre, de préférence métallique, à la douille 10).

En d'autres termes, le procédé selon l'invention comprend de préférence deux étapes de surmoulage successives, une première étape de surmoulage (figure 2) au cours de laquelle on forme l'âme porteuse 3 en surmoulant le premier matériau sur la douille 10, respectivement sur l'arbre de la roue 1, puis une seconde étape de surmoulage (figure 3) au cours de laquelle on forme la couche d'enrobage 7 en surmoulant le second matériau sur l'âme porteuse 3 (en l'espèce par-dessus cette dernière).

Un tel procédé permet notamment de réaliser rapidement et de façon simple la structure de la roue 1, avec un outillage minimal, car au moins une partie du moule (non représenté) utilisé pour le premier surmoulage, par exemple l'empreinte inférieure qui permet de mouler la surface concave de l'âme 3 opposée à la surface supérieure 5S, peut être réutilisée pour le second surmoulage.

Un tel procédé permet en outre d'économiser de l'énergie, car le second surmoulage peut intervenir « à chaud », sitôt que l'âme porteuse 3 est solidifiée, alors que ladite âme porteuse 3, et au moins une partie du moule (la partie réutilisée), est encore chaude du premier surmoulage.

Tel que cela est notamment visible sur les figures 2, 6 et 12, la fixation (par surmoulage) du moyeu 4 sur la douille 10, respectivement directement sur l'arbre, pourra être renforcée au moyen de formes d'accroche 11, 12, telles qu'une couronne d'arrêt 11 saillante (renforçant la tenue axiale) et/ou des indentations 12 radiales (renforçant la tenue au couple), prévue(s) sur la douille 10, respectivement sur l'arbre, et qui seront noyées par le premier matériau constitutif du moyeu 4 lors de la première étape de surmoulage (figure 2).

De préférence, le premier matériau polymère, préférentiellement thermoplastique, qui est utilisé pour former l'âme porteuse 3, est distinct du second matériau polymère, préférentiellement thermoplastique, qui est utilisé pour former la couche d'enrobage 7, ledit premier matériau polymère présentant une rigidité supérieure à celle dudit second matériau polymère (c'est-à-dire, en pratique, un module d'Young plus élevé que celui du second matériau).

Cette rigidité supérieure peut par exemple être obtenue grâce à l'ajout de fibres de renfort, par exemple de fibres de verre, de carbone, d'aramide, etc., noyées dans une matrice polymère, afin d'obtenir un premier matériau composite.

Bien entendu, le premier matériau aussi bien que le second matériau seront rigides une fois solidifiés, à température ambiante et sur toute la plage de température de fonctionnement prévisible de la roue 1.

L'utilisation d'un second matériau moins rigide (plus souple) pour former la couche d'enrobage 7 présentera plusieurs avantages.

Tout d'abord, un tel second matériau sera facile à usiner, ce qui rendra le taillage des dents 2 rapide et peu coûteux.

Ensuite, une fois la roue 1 formée et mise en oeuvre au sein d'un mécanisme de transmission d'effort, et plus particulièrement d'un réducteur à vis sans fin, la relative souplesse des dents d'engrènement 2 permettra à ces dernières d'épouser la forme des filets de la vis sans fin, ce qui augmentera le nombre de dents 2 en prise ainsi que les surfaces de contact sous forte charge. Cette relative souplesse permettra aussi de répartir et diffuser la charge sur une portion plus étendue de l'âme porteuse 3 et ainsi d'éviter l'apparition de contraintes locales élevées, susceptibles d'être à l'origine de ruptures.

Le fonctionnement et la longévité de la roue 1 s'en trouveront ainsi améliorés.

L'utilisation d'un premier matériau plus rigide, et plus particulièrement d'un premier matériau fibré, pour former l'âme porteuse 3, permettra avantageusement de limiter la déformation sous charge de ladite âme 3, et donc, plus globalement, de la structure de la roue 1.

L'utilisation de fibres de renfort permettra en outre de rendre ladite âme porteuse 3, et plus globalement la roue 1, moins sensible aux phénomènes de dilatation thermique, et confèrera à ladite âme porteuse 3, qui forme la portion la plus sollicitée mécaniquement de la roue 1 bi-matière ainsi obtenue, une meilleure résistance au vieillissement en fatigue mécanique, thermique et chimique (vis-à-vis des lubrifiants utilisés dans le mécanisme), et par conséquent une meilleure longévité.

Avantageusement, en créant et en façonnant à moindre coût une couche d'enrobage 7 dans un second matériau plus souple que le premier, tout en venant consolider par cette même couche d'enrobage 7 (par l'ajout d'épaisseur) l'âme porteuse 3 qui supporte ladite couche d'enrobage 7 et qui est déjà en elle-même particulièrement rigide et solide, l'invention permet d'obtenir en définitive une roue dentée 1 bi-matière qui concilie robustesse, faible coût de fabrication, et qualité de fonctionnement.

Par ailleurs, bien que le premier matériau et le second matériau présentent de préférence des compositions, et donc des propriétés mécaniques, distinctes, il posséderont de préférence une certaine affinité (compatibilité) chimique l'un envers l'autre, et le cas échéant des températures de transition vitreuse assez proches, afin de pouvoir se lier par adhérence l'un à l'autre, et plus particulièrement afin de pouvoir se fixer l'un à l'autre par re-fusion superficielle du premier matériau (de l'âme 3) lors de l'injection du second matériau (de la couche d'enrobage 7).

A titre indicatif, on pourra utiliser un premier matériau composite comprenant une matrice polymère de même composition que le second matériau mais contenant, à la différence dudit second matériau, des fibres de renfort, ou bien, si le second matériau est lui-même un composite contenant des fibres de renfort, un premier matériau contenant une plus grande concentration de fibres de renfort, ou bien des fibres de renfort d'une autre nature que celle du premier matériau.

A titre d'exemple, on pourra choisir un polyamide PA66 fibré à 50% de fibres de verre comme premier matériau (pour former l'âme 3), et un polyamide PA66 comme second matériau (pour former la couche d'enrobage 7).

Quelle que soit la composition du second matériau constitutif de la couche d'enrobage 7, cette dernière assumera toujours, du fait qu'elle est avantageusement placée dans les zones apparentes de la roue, notamment au niveau de la jante 8, qui sont les plus exposées aux éléments extérieurs, un certain rôle protecteur de l'âme 3, et plus globalement de la roue 1, à la manière d'un bouclier, et améliorera ainsi la tenue mécanique et la longévité de ladite roue 1.

De préférence, et selon une caractéristique qui peut constituer une invention à part entière, lors de l'étape (a) de réalisation de l'âme porteuse 3, on forme dans l'âme porteuse 3 des rainures de canalisation 13 qui s'étendent sensiblement radialement à la surface supérieure de la collerette 5, jusqu'au bord tombé 6, et qui se prolongent ensuite axialement, par renvoi d'angle, le long dudit bord tombé 6, à la surface radialement externe 6E dudit bord tombé, tel que cela est notamment visible sur les figures 2, 3, 5, 8, 12 et 13.

Tel que cela est visible notamment sur les figures 2, 5, 11, 12 et 13, les rainures de canalisation 13 peuvent ainsi s'étendre (chacune) depuis le moyeu 4 jusqu'au bord tombé périphérique 6, sensiblement sur toute l'étendue radiale R7F de la couche frontale 7F, c'est-à-dire plus particulièrement, tel que cela a été mentionné plus haut, occuper (chacune) radialement au moins 25 %, au moins 30 %, et préférentiellement entre 40 % et 80 %, de l'étendue radiale totale de la surface frontale de l'âme porteuse 3 qui est radialement comprise entre la paroi radialement interne de l'alésage du moyeu 4 et la surface radialement externe 6E du bord tombé 6, et/ou, de manière alternative ou équivalente, occuper radialement au moins 5%, au moins 10 %, au moins 20 %, et plus particulièrement entre 20 % et 50 %, par exemple entre 25 % et 35 % du rayon hors-tout de la roue 1 finie.

Avantageusement, ces rainures de canalisation 13 peuvent remplir une double fonction.

Tout d'abord, lors de l'étape (b) d'enrobage, lesdites rainures de canalisation 13, qui s'ouvrent à la surface apparente de l'âme porteuse 3 qui est destinée à être revêtue par la couche d'enrobage 7, contribuent à canaliser, à orienter et à homogénéiser l'écoulement radial centrifuge du second matériau (liquide) depuis le moyeu 4 jusqu'au bord tombé 6, puis le long dudit bord tombé 6, ce qui permet d'obtenir une bonne distribution de la couche d'enrobage 7.

Ensuite, après refroidissement (durcissement) de la couche d'enrobage 7, lesdites rainures de canalisation 13 forment, autour de l'axe directeur (XX'), des reliefs de type créneaux noyés dans la couche d'enrobage 7, et assurent ainsi un ancrage solide de ladite couche d'enrobage 7, ce qui améliore la cohésion de la roue à l'encontre notamment des couples qui sont transmis par ladite roue 1, entre d'une part le moyeu 4 fixé à l'arbre et appartenant à l'âme 3 et d'autre part les dents d'engrènement 2 de la jante 8 appartenant à la couche d'enrobage 7.

Avantageusement, afin d'assurer un guidage efficace de l'écoulement du second matériau jusqu'au bord tombé 6 inclus, et plus particulièrement afin de faciliter le contournement de la transition entre la collerette 5 (radiale) et le bord tombé 6 (axial), les rainures de canalisation 13 comportent (d'amont en aval de l'écoulement) un tronçon frontal 13F, creusé dans la collerette 5 et qui suit une direction sensiblement radiale (sensiblement horizontale ou bien en pente α₅), puis un tronçon latéral 13L creusé dans le bord tombé 6, qui suit un tracé sensiblement parallèle à l'axe directeur (XX'), lesdits tronçons 13F, 13L ainsi agencés en renvoi d'angle (sensiblement en « L ») étant situés dans le prolongement l'un de l'autre et communiquant l'un avec l'autre afin de former globalement une rainure 13 continue qui épouse le contour (convexe) de l'âme porteuse 3.

De préférence, les rainures de canalisation 13 seront équiréparties en étoile tout autour de l'axe directeur (XX'), tel que cela est illustré sur les figures 8, 11, 12 ou 13.

A titre indicatif, la largeur de chaque rainure de canalisation 13 pourra être sensiblement comprise entre 2 mm et 6 mm, et/ou occuper un secteur angulaire θ₁₃ compris entre 5 degrés et 15 degrés, et par exemple de l'ordre de 7 degrés à 10 degrés, en azimut (en lacet) autour de l'axe directeur (XX').

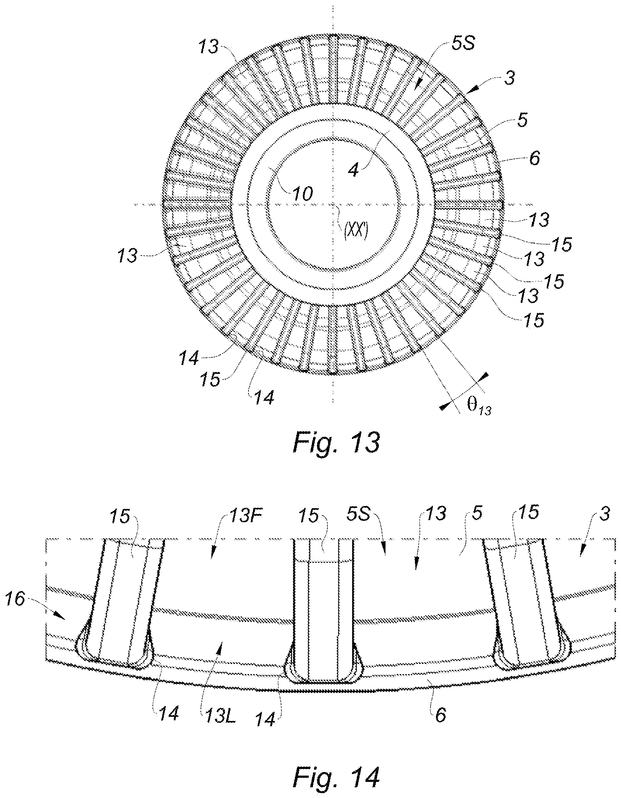

Le nombre des rainures de canalisation 13 sera de préférence supérieur à 12, et par exemple égal à 36, comme cela est illustré sur les figures 11 et 13.

A titre indicatif, la profondeur P13 des rainures de canalisation 13 (c'est-à-dire la profondeur selon laquelle chaque rainure pénètre la surface de la collerette 5, puis celle du bord tombé 6), pourra être comprise entre 1 mm et 3 mm.

En outre, les tronçons latéraux 13L (axiaux) des rainures de canalisation 13 qui longent le bord tombé 6 présentent de préférence, tel que cela est notamment bien visible sur la figure 14, des sections transverses à étranglement 14 anti-arrachement, de type queues d'aronde, qui renforcent l'accroche de la jante 8 sur ledit bord tombé 6, notamment à l'encontre des efforts radiaux centrifuges.

Les étranglements 14 pourront avantageusement être formés par des renflements des cloisons 15 mitoyennes qui séparent respectivement chaque rainure de canalisation 13 des rainures de canalisation 13 qui lui sont voisines.

En coupe dans un plan normal à l'axe directeur (XX'), la section transverse du ou des tronçons latéraux 13L concernés pourra présenter toute forme étranglée, c'est-à-dire toute forme avec rétrécissement de son ouverture sur la surface externe 6E du bord tombé, qui sera fonctionnellement équivalente à une queue d'aronde, par exemple une forme à bulbe et col étroit, une forme en « T », etc.

De telles sections avec étranglement 14 pourront avantageusement être obtenues par moulage lors de l'étape (a) de réalisation de l'âme porteuse 3, par utilisation de noyaux (ou d'une empreinte mâle) de forme conjuguée, portés sensiblement selon l'axe directeur (XX'), qui correspondra avantageusement à la direction de démoulage, et placés de façon tangente au bord tombé 6, de manière à ce que lesdits noyaux impriment chacun un tronçon latéral 13L de rainure de canalisation dans ledit bord tombé 6.

De préférence, lors de l'étape (a) de réalisation de l'âme porteuse 3, la zone de transition entre la collerette 5 et le bord tombé 6 est formée selon un arrondi 16, tel que cela est notamment bien visible sur les figures 2 à 6, 11 et 12.

Préférentiellement, le rayon de courbure R16 dudit arrondi 16 est supérieur ou égal à 2 mm, et préférentiellement inférieur ou égal à 10 mm ; ledit rayon de courbure R16 sera particulièrement préférentiellement compris sensiblement entre 2 mm et 6 mm.

Avantageusement, un rebord avec arrondi 16 évite les concentrations de contraintes au sein de la roue, et améliore donc la tenue à la rupture de ladite roue 1.

En outre, ce même arrondi 16, qui permet avantageusement aux rainures de canalisation 13 de former un renvoi d'angle coudé, facilite l'écoulement du second matériau lors de l'étape (b) d'enrobage, et plus particulièrement le contournement par le second matériau liquide de la jonction entre la collerette 5 et le bord tombé 6, en facilitant la transition entre un écoulement radial à la surface supérieure 5S de la collerette et un écoulement axial sur bord tombé 6.

De préférence, lors de l'étape (a) de réalisation de l'âme porteuse, on forme sur la surface inférieure 5I de la collerette 5, à l'opposé et à l'aplomb axial de la surface supérieure 5S destinée à recevoir la couche d'enrobage 7, une pluralité de nervures de renfort 17 disposées selon plusieurs azimuts autour de l'axe directeur (XX'), c'est-à-dire réparties selon plusieurs directions de lacet autour dudit axe directeur (XX'), chacune desdites nervures de renfort 17 reliant le moyeu 4 à la surface inférieure 5I de la collerette et à la surface radialement interne 6I du bord tombé 6, tel que cela est notamment bien visible sur les figures 5, 6, 9, 10 et 15 à 20.

Avantageusement, ces nervures de renfort 17 forment des cloisons sensiblement (voire exactement) radiales qui étayent la collerette 5 et le bord tombé 6 au dos de l'âme porteuse 3, et plus particulièrement qui augmentent localement l'épaisseur axiale de la collerette 5, dans l'espace interne concave (caché) de ladite âme porteuse 3 situé axialement à l'opposé du point d'injection du second matériau par rapport à la surface apparente supérieure 5S de la collerette 5.

Ceci permet à la collerette 5 et au bord tombé 6 de supporter, sensiblement sans déformation, la pression exercée par le second matériau lors du moulage de la couche d'enrobage 7, tout en conservant une structure creuse légère, notamment à l'aplomb axial de la couche frontale 7F d'enrobage, du fait de la présente d'alvéoles 18 vides de matière qui séparent angulairement les nervures de renfort 17 l'une de l'autre.

Les nervures de renfort 17 pourront présenter différentes formes, rectilignes ou incurvées, sans sortir du cadre de l'invention, et notamment suivre une disposition rectiligne strictement radiale en étoile autour de l'axe directeur (XX'), tel que cela est illustré sur les figures 9 et 10 ou 19 et 20, ou bien une disposition incurvée avec pieds en arches (figures 15 et 16), ou encore une disposition rectiligne en croisillons (figures 17 et 18).

Le cas échéant, tel que cela est illustré sur les figures 19 et 20, une nervure annulaire de cerclage intermédiaire 17B, centrée sur l'axe directeur (XX'), pourra assurer une jonction entre les différentes nervures de renfort 17 radiales, dans l'intervalle creux radialement compris entre le moyeu 4 et la surface (distincte) radialement interne 6I du bord tombé 6.

Avantageusement, tant par commodité de fabrication que pour améliorer la solidité de l'âme porteuse 3, les nervures de renfort 17, 17B seront réalisées d'un seul tenant avec le reste de l'âme porteuse 3, lors de l'étape (a) de réalisation par (sur)moulage de ladite âme porteuse 3.

Par ailleurs, de préférence, lors de l'étape (a) de réalisation de l'âme porteuse, on forme la surface supérieure 5S de la collerette 5 en retrait axial de l'extrémité correspondante, dite « extrémité supérieure » 4S, du moyeu 4, de manière à former un épaulement 20 entre l'extrémité supérieure 4S du moyeu et la surface supérieure 5S de la collerette, tel que cela est notamment bien visible sur les figures 2, 5 et 12.

De préférence, lors de l'étape (b) d'enrobage, la couche frontale d'enrobage 7F peut alors avantageusement venir mouiller ledit épaulement 20, tel que cela est notamment visible sur la figure 3.

Avantageusement, suite à l'étape (b) d'enrobage, on pourra ainsi conserver, sur la roue 1 finie, et tel que cela est notamment visible sur les figures 4, 6 et 8, un remplissage au moins partiel dudit épaulement 20 par ladite couche frontale 7F, selon une épaisseur axiale E_{7F} non nulle, de préférence de telle manière que ladite couche frontale 7F affleure axialement l'extrémité supérieure 4S du moyeu 4 (la couche frontale 7 comblant ainsi le volume axialement compris entre la surface supérieure 5S de la collerette et l'extrémité supérieure du moyeu 4, ici la plus proche de ladite surface supérieure 5S).

Avantageusement, l'utilisation du moyeu 4 comme repère de moulage et/ou comme repère de reprise d'usinage de la couche d'enrobage 7 simplifie la fabrication de ladite couche d'enrobage.

En effet, on pourra par exemple placer dans le moule, lors de l'étape (b) d'enrobage, un noyau central destiné à combler l'alésage du moyeu 4, et plus particulièrement un noyau comblant l'alésage de la douille 10, ou bien encore utiliser directement l'arbre de la roue 1 comme noyau, puis injecter au niveau de l'extrémité supérieure 4S du moyeu le second matériau polymère destiné à former la couche d'enrobage 7, afin de remplir l'épaulement 20 (sans risque de déborder dans l'alésage du moyeu 4, occupé et donc protégé par le noyau).

Tel que cela est illustré sur la figure 3, l'injection F du second matériau polymère se fera de préférence sensiblement en position centrale, en vis-à-vis du centre du moyeu 4, c'est-à-dire selon l'axe directeur (XX'), de sorte à former (sur la surface supérieure 4S du moyeu et sur la face supérieure du noyau qui obture ledit moyeu) un diaphragme 21 à partir duquel le second matériau liquide s'étalera progressivement à la surface de la collerette 5 puis du bord tombé 6.

Grâce au diaphragme 21, sensiblement plat, et normal à l'axe directeur (XX'), on pourra bénéficier d'une surface d'injection de matière relativement large, ce qui limitera les phénomènes de cisaillement et d'auto-échauffement du point d'injection qui seraient sinon susceptibles de dégrader la qualité du second matériau, et plus particulièrement la ténacité dudit second matériau (en effet, le cisaillement tend à couper les chaînes polymères, ce qui dégrade la viscosité et la ténacité du polymère concerné, notamment s'il s'agit d'un polyamide).

On peut ainsi obtenir un nappage homogène et efficace de l'âme porteuse 3 par un second matériau particulièrement robuste.

On pourra ensuite prévoir une étape (c) de finition (figure 4) au cours de laquelle on éliminera le diaphragme 21 par arasement, par exemple par fraisage, de sorte à obtenir une couche frontale 7F résiduelle qui vient affleurer axialement l'extrémité supérieure 4S du moyeu (qui se trouve le cas échéant elle-même dans le même plan, normal à l'axe directeur (XX'), que l'extrémité supérieure de la douille 10).

Un tel procédé de fabrication permet avantageusement d'obtenir une roue finie 1 compacte et solide en un minimum d'étapes relativement simples, et en consommant peu de matière (le volume perdu par l'arasement du diaphragme 21 étant particulièrement réduit).

Par ailleurs, de préférence, lors de l'étape (a) de réalisation de l'âme porteuse, on forme, à l'extrémité libre du bord tombé 6, située axialement à l'opposé de la collerette, un décrochement radial rentrant 22, du genre indentation ou gorge annulaire, tel que cela est visible notamment sur les figures 2, 5, 6 et 12.

Ainsi, lors de l'étape (b) d'enrobage, on peut poursuivre le mouillage du bord tombé 6 avec le second matériau polymère jusqu'à remplir ledit décrochement radial rentrant 22, en formant ainsi un rebord d'appui 23 venu de matière avec la couche latérale 7L d'enrobage, de telle manière que l'on bloque axialement l'âme porteuse 3 dans les deux sens au sein de la couche d'enrobage 7 en coinçant ladite âme porteuse 3 entre deux butées formées d'une part par la couche frontale 7F et d'autre part par le rebord d'appui 23, tel que cela est bien visible sur les figures 3 et 6.

Le cas échéant, le décrochement 22 pourra faire suite axialement à un collet annulaire saillant 24 qui marque la fin de la rainure de canalisation 13 (et plus particulièrement de son tronçon latéral 13L) sur le bord tombé 6, tel que cela est illustré notamment sur la figure 5.

Le rebord d'appui 23 formera alors un collet radialement rentrant de forme sensiblement conjuguée, qui viendra en prise sous ledit collet annulaire saillant 24.

On notera du reste que ledit collet annulaire saillant 24 pourra contribuer à rigidifier le bord tombé 6 radialement sous les dents d'engrènement 2, afin que la roue 1 puisse mieux résister aux déformations de type ovalisation sous la contrainte d'engrènement.

Par ailleurs, lors de l'étape (a) de réalisation de l'âme porteuse, on confère de préférence à la surface supérieure 5S de la collerette 5 et/ou à la surface radialement externe 6E du bord tombé 6 une structure texturée, présentant des reliefs de texturation (non représentés), du genre stries, dont la profondeur est de préférence sensiblement comprise entre 0,1 mm et 0,5 mm.

Avantageusement, on pourra alors provoquer (relativement facilement), lors de l'étape (b) d'enrobage, la fusion superficielle desdits reliefs de texturation pour améliorer l'adhérence de la couche d'enrobage 7 sur l'âme porteuse 3.

Avantageusement, la présence de reliefs de texturation fins (moins profonds que les rainures de canalisation 13, notamment), qui perturbent légèrement l'écoulement du second matériau à la surface de l'âme 3, et qui sont plus facilement sujets que le reste de la collerette 5 à l'échauffement, et donc au franchissement de la température de transition vitreuse du premier matériau, permettra au second matériau constitutif de la couche d'enrobage 7 de se mêler plus facilement au premier matériau constitutif de l'âme 3, et ainsi d'améliorer l'ancrage de la couche d'enrobage 7 sur l'âme 3 au niveau de l'interface entre les deux matériaux.

Avantageusement, tel que cela a été dit plus haut, une partie de l'énergie nécessaire à l'échauffement de l'âme porteuse 3 pourra provenir de la réutilisation à chaud, lors de l'étape (b) d'enrobage, d'une partie du moule ayant déjà servi pour la fabrication de l'âme porteuse 3 lors de l'étape (a). Une âme porteuse 3 peut permetter et faciliter la mise en oeuvre d'un procédé selon l'invention. Il peut s'agir d'une âme porteuse 3 (annulaire) en (premier) matériau polymère, qui comprend, de préférence d'un seul tenant, un moyeu 4 d'axe directeur (XX'), une collerette 5 qui s'étend sensiblement radialement depuis ledit moyeu 4, en s'éloignant de l'axe directeur (XX'), jusqu'à un bord tombé 6 périphérique dont la jonction avec ladite collerette 5 forme un arrondi 16, âme porteuse 3 qui présente en outre des rainures de canalisation 13 creusées dans (et s'ouvrant sur) la surface supérieure 5S de la collerette puis dans la surface radialement externe 6E du bord tombé 6, de telle sorte que lesdites rainures de canalisation 13 s'étendent sensiblement radialement à la surface supérieure 5S de la collerette 5, jusqu'au bord tombé, et se prolongent ensuite axialement, par renvoi d'angle, le long dudit bord tombé 6, à la surface radialement externe 6E dudit bord tombé 6.

## Revendications

1. Procédé de fabrication d'une roue dentée (1), ledit procédé comprenant une étape (a) de réalisation d'une âme porteuse, au cours de laquelle on réalise une âme porteuse (3) dans un premier matériau polymère, ladite âme porteuse (3) comportant un moyeu (4), d'axe directeur (XX'), ainsi qu'une collerette (5) qui s'étend sensiblement radialement depuis ledit moyeu (4), en s'éloignant de l'axe directeur (XX'), jusqu'à un bord tombé (6) périphérique, ladite collerette (5) étant délimitée axialement par une surface dite « supérieure » (5S) orientée du côté axialement opposé au bord tombé (6), et par une surface dite « inférieure » (5I) orientée axialement du côté du bord tombé (6), ledit procédé comprenant ensuite une étape (b) d'enrobage au cours de laquelle on réalise par surmoulage sur l'âme porteuse (3), dans un second matériau polymère, une couche d'enrobage (7) permanente qui reste à demeure sur la roue dentée (1) finie, ladite couche d'enrobage (7) comprenant d'un seul tenant d'une part une couche frontale (7F) qui recouvre la surface supérieure (5S) de la collerette (5) en surépaisseur axiale de ladite collerette, et d'autre part une couche latérale (7L) qui prolonge axialement ladite couche frontale en recouvrant la surface radialement externe (6E) du bord tombé (6), en surépaisseur radiale dudit bord tombé, de telle manière que ladite couche latérale (7L) forme une jante (8) dans l'épaisseur radiale de laquelle sont réalisées les dents d'engrènement (2) de la roue (1), le procédé étant **caractérisé en ce que**, lors de l'étape (a) de réalisation de l'âme porteuse, on forme dans l'âme porteuse (3) des rainures de canalisation (13) qui s'étendent sensiblement radialement à la surface supérieure (5S) de la collerette (5), jusqu'au bord tombé, et qui se prolongent ensuite axialement, par renvoi d'angle, le long dudit bord tombé (6), à la surface radialement externe (6E) dudit bord tombé.

2. Procédé selon la revendication 1 **caractérisé en ce que** les rainures de canalisation (13) s'étendent, à la surface supérieure (5S) de la collerette, depuis le moyeu (4) jusqu'au bord tombé (6).

3. Procédé selon la revendication 1 ou 2 **caractérisé en ce que** les tronçons latéraux (13L) des rainures de canalisation (13) qui longent le bord tombé (6) présentent des sections transverses à étranglement (14) anti-arrachement, de type queues d'aronde, qui renforcent l'accroche de la jante (8) sur ledit bord tombé (6), notamment à l'encontre des efforts radiaux centrifuges.

4. Procédé selon l'une des revendications précédentes **caractérisé en ce que**, lors de l'étape (a) de réalisation de l'âme porteuse, la zone de transition entre la collerette (5) et le bord tombé (6) est formée selon un arrondi (16), dont le rayon de courbure (R16) est de préférence sensiblement compris entre 2 mm et 6 mm.

5. Procédé selon l'une des revendications précédentes **caractérisé en ce que**, lors de l'étape (a) de réalisation de l'âme porteuse, on forme sur la surface inférieure (5I) de la collerette (5), à l'opposé et à l'aplomb axial de la surface supérieure (5S) destinée à recevoir la couche d'enrobage (7), une pluralité de nervures de renfort (17) disposées selon plusieurs azimuts autour de l'axe directeur (XX'), et qui relient chacune le moyeu (4) à la surface inférieure (5I) de la collerette (5) et à la surface radialement interne (6I) du bord tombé (6).

6. Procédé selon l'une des revendications précédentes **caractérisé en ce que**, lors de l'étape (a) de réalisation de l'âme porteuse (3), on réalise le moyeu (4), la collerette (5) et le bord tombé (6) d'un seul tenant, en formant l'âme porteuse (3) par surmoulage sur une douille métallique de raccordement (10), destinée à être emmanchée sur un arbre, ou bien directement par surmoulage sur l'arbre de support définitif de la roue dentée (1).

7. Procédé selon l'une des revendications précédentes **caractérisé en ce que**, lors de l'étape (a) de réalisation de l'âme porteuse, on forme la surface supérieure (5S) de la collerette (5) en retrait axial de l'extrémité correspondante, dite « extrémité supérieure » (4S), du moyeu (4), de manière à former un épaulement (20) entre l'extrémité supérieure (4S) du moyeu et la surface supérieure (5S) de la collerette, **en ce que**, lors de l'étape (b) d'enrobage, la couche frontale (7F) d'enrobage vient mouiller ledit épaulement (20), et **en ce que**, suite à l'étape (b) d'enrobage, on conserve, sur la roue (1) finie, un remplissage au moins partiel dudit épaulement (20) par ladite couche frontale (7F), selon une épaisseur axiale (E_{7F}) non nulle, de préférence de telle manière que ladite couche frontale affleure axialement l'extrémité supérieure (4S) du moyeu.

8. Procédé selon l'une des revendications précédentes **caractérisé en ce que**, lors de l'étape (a) de réalisation de l'âme porteuse, on forme, à l'extrémité libre du bord tombé (6), située axialement à l'opposé de la collerette (5), un décrochement radial rentrant (22), du genre indentation ou gorge annulaire, et **en ce que**, lors de l'étape (b) d'enrobage, on poursuit le mouillage du bord tombé (6) avec le second matériau polymère jusqu'à remplir ledit décrochement radial rentrant (22), en formant ainsi un rebord d'appui (23) venu de matière avec la couche latérale (7L), de telle manière que l'on bloque axialement l'âme porteuse (3) dans les deux sens au sein de la couche d'enrobage (7) en coinçant ladite âme porteuse (3) entre deux butées formées d'une part par la couche frontale (7F) et d'autre part par le rebord d'appui (23).

9. Procédé selon l'une des revendications précédentes **caractérisé en ce que**, lors de l'étape (a) de réalisation de l'âme porteuse, on confère à la surface supérieure (5S) de la collerette (5) et/ou à la surface radialement externe (6E) du bord tombé (6) une structure texturée, présentant des reliefs de texturation dont la profondeur est de préférence sensiblement comprise entre 0,1 mm et 0,5 mm, et **en ce que**, lors de l'étape (b) d'enrobage, on provoque la fusion superficielle desdits reliefs de texturation pour améliorer l'adhérence de la couche d'enrobage (7) sur l'âme porteuse (3).

10. Procédé selon l'une des revendications précédentes **caractérisé en ce que** le premier matériau polymère, de préférence thermoplastique, qui est utilisé pour former l'âme porteuse (3), est distinct du second matériau polymère, de préférence thermoplastique, qui est utilisé pour former la couche d'enrobage (7), et présente une rigidité supérieure à celle dudit second matériau polymère, par exemple grâce à l'ajout de fibres de renfort.

## Patentansprüche

1. Verfahren zur Herstellung eines Zahnrads (1), wobei das Verfahren einen Schritt (a) zum Ausführen eines Tragkerns umfasst, während dessen ein Tragkern (3) aus einem ersten Polymermaterial ausgeführt wird, wobei der Tragkern (3) eine Nabe (4) mit einer Leitachse (XX') sowie einen Kragen (5) aufweist, der sich im Wesentlichen radial ausgehend von der Nabe (4), wobei er sich von der Leitachse (XX') entfernt, bis zu einem umlaufenden Profilrand (6) erstreckt, wobei der Kragen (5) axial von einer so genannten "oberen" Fläche (5S), die auf der dem Profilrand (6) axial gegenüberliegenden Seite ausgerichtet ist, und von einer so genannten "unteren" Fläche (5I), die axial auf Seite des Profilrands (6) ausgerichtet ist, begrenzt wird, wobei das Verfahren danach einen Schritt (b) zum Überziehen umfasst, während dessen durch Umspritzen auf dem Tragkern (3) eine dauerhafte Überzugsschicht (7) aus einem zweiten Polymermaterial ausgeführt wird, die auf dem fertigen Zahnrad (1) verbleibt, wobei die Überzugsschicht (7) aus einem Stück einerseits eine vordere Schicht (7F), die die obere Fläche (5S) des Kragens (5) als axiales Aufmaß des Kragens bedeckt, und andererseits eine seitliche Schicht (7L), die die vordere Schicht axial verlängert und dabei die radial äußere Fläche (6E) des Profilrands (6) als radiales Aufmaß des Profilrands bedeckt, umfasst, derart dass die seitliche Schicht (7L) eine Felge (8) in der radialen Dicke bildet, von der aus die Eingriffszähne (2) des Rads (1) ausgeführt sind, wobei das Verfahren **dadurch gekennzeichnet ist, dass** während des Schritts (a) zum Ausführen des Tragkerns in dem Tragkern (3) Kanalrillen (13) gebildet werden, die sich im Wesentlichen radial auf der oberen Fläche (5S) des Kragens (5) bis zum Profilrand erstrecken und die sich danach axial durch eine Eckumlenkung entlang des Profilrands (6) auf der radial äußeren Fläche (6E) des Profilrands verlängern.

2. Verfahren nach Anspruch 1, **dadurch gekennzeichnet, dass** sich die Kanalrillen (13) auf der oberen Fläche (5S) des Kragens ausgehend von der Nabe (4) bis zum Profilrand (6) erstrecken.

3. Verfahren nach Anspruch 1 oder 2, **dadurch gekennzeichnet, dass** die seitlichen Abschnitte (13L) der Kanalrillen (13), die dem Profilrand (6) folgen, Querbereiche mit ausreißfester Verengung (14) von der Art eines Schwalbenschwanzes besitzen, die die Befestigung der Felge (8) auf dem Profilrand (6) verstärken, insbesondere gegen radiale Zentrifugalkräfte.

4. Verfahren nach einem der vorstehenden Ansprüche, **dadurch gekennzeichnet, dass** während des Schritts (a) zum Ausführen des Tragkerns die Übergangszone zwischen dem Kragen (5) und dem Profilrand (6) gemäß einer Rundung (16) gebildet wird, deren Krümmungsradius (R16) vorzugsweise im Wesentlichen zwischen 2 mm und 6 mm beträgt.

5. Verfahren nach einem der vorstehenden Ansprüche, **dadurch gekennzeichnet, dass** während des Schritts (a) zum Ausführen des Tragkerns auf der unteren Fläche (5I) des Kragens (5), gegenüber und im axialen Lot der oberen Fläche (5S), die zur Aufnahme der Überzugsschicht (7) bestimmt ist, eine Vielzahl von Verstärkungsrippen (17) gebildet wird, die gemäß mehreren Winkeln rund um die Leitachse (XX') angeordnet sind und die jeweils die Nabe (4) mit der unteren Fläche (5I) des Kragens (5) und mit der radial inneren Fläche (6I) des Profilrands (6) verbinden.

6. Verfahren nach einem der vorstehenden Ansprüche, **dadurch gekennzeichnet, dass** während des Schritts (a) zum Ausführen des Tragkerns (3) die Nabe (4), der Kragen (5) und der Profilrand (6) aus einem Stück ausgeführt werden, wobei der Tragkern (3) durch Umspritzen auf einer Anschlusshülse (10) aus Metall, die dazu bestimmt ist, auf eine Welle aufgesteckt zu werden, oder auch direkt durch Umspritzen auf der endgültigen Stützwelle des Zahnrads (1) gebildet wird.

7. Verfahren nach einem der vorstehenden Ansprüche, **dadurch gekennzeichnet, dass** während des Schritts (a) zum Ausführen des Tragkerns die obere Fläche (5S) des Kragens (5) von dem entsprechenden Ende, dem so genannten "oberen Ende" (4S), der Nabe (4) axial rückspringend gebildet wird, um einen Absatz (20) zwischen dem oberen Ende (4S) der Nabe und der oberen Fläche (5S) des Kragens zu bilden, und dadurch, dass während des Schritts (b) zum Überziehen die vordere Überzugsschicht (7F) den Absatz (20) benetzt, und dadurch, dass in der Folge des Schritts (b) zum Überziehen auf dem fertigen Rad (1) eine mindestens teilweise Füllung des Absatzes (20) durch die vordere Schicht (7F) gemäß einer axialen Dicke (E_{7F}), die nicht null ist, bewahrt wird, vorzugsweise derart dass die vordere Schicht das obere Ende (4S) der Nabe axial berührt.

8. Verfahren nach einem der vorstehenden Ansprüche, **dadurch gekennzeichnet, dass** während des Schritts (a) zum Ausführen des Tragkerns an dem freien Ende des Profilrands (6), das sich dem Kragen (5) axial gegenüberliegend befindet, ein einspringender radialer Versatz (22), wie etwa ein Eindruck oder eine ringförmige Nut, gebildet wird, und dadurch, dass während des Schritts (b) zum Überziehen die Benetzung des Profilrands (6) mit dem zweiten Polymermaterial bis zur Füllung des einspringenden radialen Versatzes (22) fortgesetzt wird, wobei so ein Auflagerand (23) aus einem Material mit der seitlichen Schicht (7L) gebildet wird, derart dass der Tragkern (3) in beide Richtungen innerhalb der Überzugsschicht (7) axial blockiert wird, indem der Tragkern (3) zwischen zwei Anschlägen eingeklemmt wird, die einerseits von der vorderen Schicht (7F) und andererseits von dem Auflagerand (23) gebildet werden.

9. Verfahren nach einem der vorstehenden Ansprüche, **dadurch gekennzeichnet, dass** während des Schritts (a) zum Ausführen des Tragkerns der oberen Fläche (5S) des Kragens (5) und/oder der radial äußeren Fläche (6E) des Profilrands (6) eine texturierte Struktur verliehen wird, die Texturierungserhöhungen besitzt, deren Tiefe vorzugweise im Wesentlichen zwischen 0,1 mm und 0,5 mm beträgt, und dadurch, dass während des Schritts (b) zum Überziehen die Oberflächenverschmelzung der Texturierungserhöhungen hervorgerufen wird, um die Haftung der Überzugsschicht (7) auf dem Tragkern (3) zu verbessern.

10. Verfahren nach einem der vorstehenden Ansprüche, **dadurch gekennzeichnet, dass** sich das erste, vorzugsweise thermoplastische, Polymermaterial, das zum Bilden des Tragkerns (3) verwendet wird, von dem zweiten, vorzugsweise thermoplastischen, Polymermaterial, das zum Bilden der Überzugsschicht (7) verwendet wird, unterscheidet und eine Steifigkeit besitzt, die höher ist als jene des zweiten Polymermaterials, zum Beispiel dank der Zugabe von Verstärkungsfasern.

## Claims

1. A method for manufacturing a toothed wheel (1), said method comprising a carrier core realization step (a), during which a carrier core (3) is made of a first polymer material, said carrier core (3) including a hub (4), with a main axis (XX'), as well as a collar (5) which extends substantially radially from said hub (4), away from the main axis (XX'), up to a peripheral flanged edge (6), said collar (5) being delimited axially by a surface called « upper » surface (5S) orientated on the side axially opposite to the flanged edge (6), and by a surface called « lower » surface (51) axially orientated on the side of the flanged edge (6), said method then comprising a coating step (b) during which is carried out by overmolding on the carrier core (3), in a second polymer material, a permanent coating layer (7) which remains permanently on the completed toothed wheel (1), said coating layer (7) comprising in one piece, on the one hand, a frontal layer (7F) which covers the upper surface (5S) of the collar (5) as an axial over-thickness of said collar and, on the other hand, a lateral layer (7L) which axially extends said frontal layer by covering the radially outer surface (6E) of the flanged edge (6), as a radial over-thickness of said flanged edge, so that said lateral layer (7L) forms a wheel rim (8) in the radial thickness of which the meshing teeth (2) of the wheel (1) are realized, the method being **characterized in**, during the carrier core realization step (a), forming channeling grooves (13) in the carrier core (3), wherein the channeling grooves (13) extend substantially radially on the upper surface (5S) of the collar (5), up to the flanged edge, and further extend axially, in forming an angle, along said flanged edge (6), on the radially outer surface (6E) of said flanged edge.

2. The method according to claim 1, **characterized in that** the channeling grooves (13) extend, on the upper surface (5S) of the collar, from the hub (4) up to the flanged edge (6).

3. The method according to claim 1 or 2, **characterized in that** the lateral sections (13L) of the channeling grooves (13) which follow the flanged edge (6) present cross-sections with an anti pull-out constriction (14), such as dovetails, which reinforce the gripping of the wheel rim (8) on said flanged edge (6), in particular against the radial centrifugal forces.

4. The method according to any of the preceding claims, **characterized in that**, during the carrier core realization step (a), the transition area between the collar (5) and the flanged edge (6) is formed according to a rounded edge (16), the radius of curvature (R16) of which is preferably substantially comprised between 2 mm and 6 mm.

5. The method according to any of the preceding claims, **characterized in that**, during the carrier core realization step (a), are formed on the lower surface (51) of the collar (5), opposite to and axially below the upper surface (5S) intended to receive the coating layer (7), a plurality of reinforcing ribs (17) disposed according to several azimuths around the main axis (XX'), and each linking the hub (4) to the lower surface (51) of the collar (5) and to the radially inner surface (61) of the flanged edge (6).

6. The method according to any of the preceding claims, **characterized in that**, during the carrier core (3) realization step (a), the hub (4), the collar (5) and the flanged edge (6) are made of one piece, by forming the carrier core (3) by an overmolding operation, on a metallic connecting sleeve (10), intended to be press-fitted on a shaft or directly on the ultimate support shaft of the toothed wheel (1).

7. The method according to any of the preceding claims, **characterized in that**, during the carrier core realization step (a), the upper surface (5S) of the collar (5) is formed axially set-back with respect to the corresponding end of the hub (4), called « upper end » (4S), so as to form a shoulder (20) between the upper end (4S) of the hub and the upper surface (5S) of the collar, **in that**, during the coating step (b), the frontal coating layer (7F) comes in contact with said shoulder (20), and **in that**, subsequently to the coating step (b), an at least partial filling of said shoulder (20) with said frontal layer (7F) having a non-zero axial thickness (E_{7F}) is kept, on the completed wheel (1), preferably so that said frontal layer flushes axially with the upper end (4S) of the hub.

8. The method according to any of the preceding claims, **characterized in that**, during the carrier core realization step (a), is formed, at the free end of the flanged edge (6), located axially opposite to the collar (5), a radially recessed cut-out (22), such as an indentation or an annular groove, and **in that**, during the coating step (b), covering the flanged edge (6) with the second polymer material is carried on until filling said radially recessed cut-out (22), thereby forming a bearing rim (23) made of one piece with the lateral layer (7L), so that the carrier core (3) is axially blocked in both directions within the coating layer (7) by catching said carrier core (3) between two abutments formed, on the one hand, by the frontal layer (7F) and, on the other hand, by the bearing rim (23).

9. The method according to any of the preceding claims, **characterized in that**, during the carrier core realization step (a), a textured structure is conferred to the upper surface (5S) of the collar (5) and/or to the radially outer surface (6E) of the flanged edge (6), wherein said textured structure presents textural reliefs the depth of which is preferably substantially comprised between 0.1 mm and 0.5 mm, and **in that**, during the coating step (b), the superficial melting of said textural reliefs is caused so as to improve the adherence of the coating layer (7) on the carrier core (3).

10. The method according to any of the preceding claims, **characterized in that** the first polymer, preferably thermoplastic, material which is used to form the carrier core (3), is distinct from the second polymer, preferably thermoplastic, material which is used to form the coating layer (7), and presents a higher rigidity than the rigidity of said second polymer material, for example thanks to the addition of reinforcing fibers.
